# EUROPÄISCHE PATENTANMELDUNG

(11) **EP 3 686 867 A1**
(43) Veröffentlichungstag der Anmeldung: **29.07.2020**
(21) Anmeldenummer: 19213537.4
(22) Anmeldetag: 04.12.2019
(51) Int. Cl.: G08G 5/00, G08G 3/02, G06N 20/10, G06N 3/08, G06N 3/04

(54) **VERKEHRSÜBERWACHUNGSEINRICHTUNG UND VERFAHREN ZUR ÜBERWACHUNG VON VERKEHRSBEWEGUNGEN**

(30) Priorität: 24.01.2019 DE 102019000509
(71) Anmelder: MBDA Deutschland GmbH, 86529 Schrobenhausen (DE)
(72) Erfinder: GIORDANO, Giuseppe, 81479 München (DE); GROSSMANN, Florian, 85077 Manching (DE)
(74) Vertreter: Isarpatent

(57) **Zusammenfassung**

Eine Verkehrsüberwachungseinrichtung weist einen Überwachungsprozessor mit einer Eingabeschnittstelle und einer Ausgabeschnittstelle sowie ein KI-System auf, welches mit dem Überwachungsprozessor in bidirektionaler Datenkommunikation steht. Das KI-System weist einen KI-Prozessor, einen auf selbstlernenden Algorithmen basierenden Regelwerkgenerator und einen Referenzregelwerkspeicher auf. Der Regelwerkgenerator des KI-Systems ist dazu ausgelegt, auf der Basis von über die Eingabeschnittstelle des Überwachungsprozessors empfangenen zeitlich und räumlich aufgelösten Beobachtungsdaten über Verkehrsbewegungen Muster und Gesetzmäßigkeiten in den Verkehrsbewegungen zu detektieren und die detektierten Muster und Gesetzmäßigkeiten in den Verkehrsbewegungen als Referenzregelwerk in dem Referenzregelwerkspeicher zu speichern. Der KI-Prozessor ist dazu ausgelegt, auf Anfrage des Überwachungsprozessors Prüfdaten einzelner über die Eingabeschnittstelle empfangener Verkehrsbewegungen auf Abweichungen von dem in dem Referenzregelwerkspeicher abgelegten Referenzregelwerk zu überprüfen. Der Überwachungsprozessor ist dazu ausgelegt, über die Ausgabeschnittstelle Warnsignale auszugeben, falls die von dem KI-Prozessor ermittelten Abweichungen über einem vorgebbaren Abweichungsschwellwert liegen.

## Beschreibung

### TECHNISCHES GEBIET DER ERFINDUNG

Die Erfindung betrifft eine Verkehrsüberwachungseinrichtung sowie Verfahren zur Überwachung von Verkehrsbewegungen, insbesondere Verkehrsbewegungen in der zivilen oder militärischen Luft-, Raum- oder Schifffahrt.

### TECHNISCHER HINTERGRUND

Verkehrsbewegungen in der Luft- und Schifffahrt folgen im längerfristigen Mittel regulären Bewegungsmustern, die durch externe Regularien oder technische Vorgaben geprägt sind. Derartige reguläre Bewegungsmuster können gewöhnlichen Verkehrsbewegungen zugeordnet werden. Einzelne Abweichungen von solchen regulären Bewegungsmustern können unter Umständen Rückschlüsse auf ungewöhnliches und womöglich ungewolltes Verkehrsverhalten einzelner Verkehrsteilnehmer hindeuten.

Um insbesondere in der Luft- und Schifffahrt ungewöhnliche Verkehrsbewegungen möglichst rasch erkennen und bewerten zu können, bedarf es üblicherweise dauerhafter und kontinuierlicher menschlicher Überwachung, die für die heutige Vielzahl von Verkehrsbewegungen und zu überwachender Verkehrsräume nicht ständig gewährleistet werden kann. Verschiedene Ansätze beschäftigen sich daher mit einer Automatisierung solcher Überwachungsprozesse, um maschinell generierte Warnhinweise bei einem Auftreten ungewöhnlicher Verkehrsbewegungen erzeugen zu können.

Die Druckschrift Daranda, A.: "A Neural Network Approach To Predict Marine Traffic", Litauische Universität von Vilnius, Institut für Mathematik und Informatik, Technischer Bericht MII-DS-07T-16-9-16, Oktober 2016, abrufbar unter http://old.mii.lt/files/07t daranda ataskaita2016.pdf offenbart den Einsatz von künstlichen neuronalen Netzwerken zur Vorhersage von maritimen Verkehrsrouten auf der Basis von beobachteten Verkehrsrouten.

Die Druckschrift Chatzikokolakis, K.; Zissis, D.; Spiliopoulos, G.; Tserpes, K.: "Mining Vessel Trajectory Data for Patterns of Search and Rescue", Workshop Proceedings of the EDBT/ICDT 2018 Joint Conference Wien, Österreich, 26. März 2018, abrufbar unter http://ceur-ws.org/Vol-2083/paper-18.pdf offenbart ein Verfahren zur automatisierten Nachverfolgung von Such- und Rettungsmissionen (SAR) auf der Basis parallelisierter, nicht-parametrischer statistischer Random-Forest-Klassifikatoren.

Die Druckschrift US 2011/0144897 A1 offenbart ein Verfahren zur Nachverfolgung von Flugzeugen, bei dem Positionsdaten von Flugzeugen mittels Flugverhaltensalgorithmen analysiert werden, um Routenabweichungen zu ermitteln und einen Flugroutenanalysebericht zu erstellen.

### ZUSAMMENFASSUNG DER ERFINDUNG

Eine der Aufgaben der Erfindung besteht daher darin, verbesserte Lösungen für die Verkehrsraumüberwachung in nicht-kooperativen Verkehrsräumen wie etwa einem Luftraum oder einem Wasserraum außerhalb des Einflussbereiches einer überwachenden Entität zu finden.

Diese und andere Aufgaben werden durch eine Verkehrsüberwachungseinrichtung mit den Merkmalen des Anspruchs 1 sowie durch ein Verfahren zur Überwachung von Verkehrsbewegungen mit den Merkmalen des Anspruchs 7 gelöst.

Gemäß einem ersten Aspekt der Erfindung umfasst eine Verkehrsüberwachungseinrichtung einen Überwachungsprozessor mit einer Eingabeschnittstelle und einer Ausgabeschnittstelle sowie ein KI-System, welches mit dem Überwachungsprozessor in bidirektionaler Datenkommunikation steht. Das KI-System weist einen KI-Prozessor, einen auf selbstlernenden Algorithmen basierenden Regelwerkgenerator und einen Referenzregelwerkspeicher auf. Der Regelwerkgenerator des KI-Systems ist dazu ausgelegt, auf der Basis von über die Eingabeschnittstelle des Überwachungsprozessors empfangenen zeitlich und räumlich aufgelösten Beobachtungsdaten über Verkehrsbewegungen Muster und Gesetzmäßigkeiten in den Verkehrsbewegungen zu detektieren und die detektierten Muster und Gesetzmäßigkeiten in den Verkehrsbewegungen als Referenzregelwerk in dem Referenzregelwerkspeicher zu speichern. Der KI-Prozessor ist dazu ausgelegt, auf Anfrage des Überwachungsprozessors Prüfdaten einzelner über die Eingabeschnittstelle empfangener Verkehrsbewegungen auf Abweichungen von dem in dem Referenzregelwerkspeicher abgelegten Referenzregelwerk zu überprüfen. Der Überwachungsprozessor ist dazu ausgelegt, über die Ausgabeschnittstelle Warnsignale auszugeben, falls die von dem KI-Prozessor ermittelten Abweichungen über einem vorgebbaren Abweichungsschwellwert liegen.

Gemäß einem zweiten Aspekt der Erfindung umfasst ein Verfahren zur Überwachung von Verkehrsbewegungen die Schritte des Empfangens von zeitlich und räumlich aufgelösten Beobachtungsdaten über Verkehrsbewegungen durch einen Überwachungsprozessor, des Detektierens von Mustern und Gesetzmäßigkeiten in den Verkehrsbewegungen auf der Basis von den empfangenen zeitlich und räumlich aufgelösten Beobachtungsdaten mittels eines auf selbstlernenden Algorithmen basierenden Regelwerkgenerators eines KI-Systems, des Erzeugens eines Referenzregelwerks, welches auf den durch den Regelwerkgenerator detektierten Mustern und Gesetzmäßigkeiten basiert; Speichern des Referenzregelwerks in einem Referenzregelwerkspeicher des KI-Systems, des Überprüfens von Prüfdaten einzelner an dem Überwachungsprozessor empfangener Verkehrsbewegungen auf Abweichungen von dem in dem Referenzregelwerkspeicher abgelegten Referenzregelwerk durch einen KI-Prozessor des KI-Systems, und des Ausgebens von Warnsignalen durch den Überwachungsprozessor, falls die von dem KI-Prozessor ermittelten Abweichungen über einem vorgebbaren Abweichungsschwellwert liegen.

Eine wesentliche Idee der Erfindung besteht darin, zweistufiges algorithmisches maschinelles Lernen einzusetzen, um in einer fortwährend mitlaufenden ersten Stufe beobachtbare Informationen über Verkehrsbewegungen für den Aufbau einer Lerndatenbank zu nutzen, aus der ein System künstlicher Intelligenz (KI-System) Muster und Gesetzmäßigkeiten in den zu überwachenden Verkehrsbewegungen ableiten kann. In einer zweiten Stufe wird in periodischen Abständen ein gewonnenes Muster- und Gesetzmäßigkeitsregelwerk in ein aktuelles Referenzregelwerk extrahiert, gegenüber welchem Abweichungen neu beobachteter Verkehrsbewegungen durch das KI-System arbitriert werden können. Überschreiten die arbitrierten Abweichungen vorgebbare Abweichungsschwellwerte, kann das KI-System Warnhinweise mit Informationen über abweichende Parameter bestimmter beobachteter Verkehrsbewegungen ausgeben, auf welche entweder automatisiert durch nachgeschaltete Systeme oder individuell nach Bewertung durch menschliche Nutzer reagiert werden kann.

Ein besonderer Vorteil in den erfindungsgemäßen Lösungen besteht darin, dass potentiell problematische Ereignisse wie etwa bevorstehende Terroranschläge, drohende Flugzeugabstürze oder feindselige militärische Operationen, die sich regelmäßig durch ungewöhnliche Verkehrsbewegungen auszeichnen, leichter, zuverlässiger und schneller als solche erkannt werden können. Durch die dynamische Adaptivität des KI-Systems können insbesondere nicht-kooperative Verkehrsräume besser überwacht werden, da sich Änderungen in den typischen Verkehrsbewegungen automatisch in der Aktualisierung der Referenzregelwerke niederschlagen. Mit den erfindungsgemäßen Lösungen können etwa irreguläre Bewegungen unbekannter Fluggeräte oder Flugkörper sowie Seebewegungen von Wasserfahrzeugen mit potentiell krimineller Intention rasch von Verkehrsbewegungen anderer sich wie erwartet verhaltender Verkehrsteilnehmer diskriminiert werden.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen der Verkehrsüberwachungseinrichtung kann der Regelwerkgenerator dazu ausgelegt sein, das in dem Referenzregelwerkspeicher abgelegte Referenzregelwerk in periodischen Abständen auf der Basis neu hinzukommender Beobachtungsdaten über Verkehrsbewegungen zu aktualisieren.

Gemäß einigen weiteren Ausführungsformen der Verkehrsüberwachungseinrichtung kann die Verkehrsüberwachungseinrichtung einen Verkehrsbewegungsdatenspeicher umfassen, welcher mit dem Überwachungsprozessor gekoppelt und welcher dazu ausgelegt ist, die über die Eingabeschnittstelle des Überwachungsprozessors empfangenen zeitlich und räumlich aufgelösten Beobachtungsdaten über Verkehrsbewegungen zu speichern.

Gemäß einigen weiteren Ausführungsformen der Verkehrsüberwachungseinrichtung kann der Regelwerkgenerator einen Stützvektorklassifikator, ein neuronales Netzwerk, einen Random-Forest-Klassifikator, einen Entscheidungsbaum-Klassifikator, ein Monte-Carlo-Netzwerk oder einen Bayes'schen Klassifikator aufweisen.

Gemäß einigen weiteren Ausführungsformen der Verkehrsüberwachungseinrichtung können die Beobachtungsdaten über Verkehrsbewegungen Informationen über Bewegungen von luftbasierten Vehikeln wie etwa Luftfahrzeugen, Fluggeräten oder Flugkörpern und/oder über Bewegungen von wasserbasierten Vehikeln wie etwa Booten, Schiffen oder U-Booten umfassen. Dabei können die Informationen über Bewegungen in manchen Ausführungsformen Routeninformationen, Geschwindigkeitsinformationen und/oder Positionsinformationen der luft- oder wasserbasierten Vehikel umfassen.

Gemäß einigen Ausführungsformen des Verfahrens kann der Regelwerkgenerator das in dem Referenzregelwerkspeicher abgelegte Referenzregelwerk in periodischen Abständen auf der Basis neu hinzukommender Beobachtungsdaten über Verkehrsbewegungen aktualisieren.

Gemäß einigen weiteren Ausführungsformen des Verfahrens kann der Regelwerkgenerator einen Stützvektorklassifikator, ein neuronales Netzwerk, einen Random-Forest-Klassifikator, einen Entscheidungsbaum-Klassifikator, ein Monte-Carlo-Netzwerk oder einen Bayes'schen Klassifikator aufweisen.

Gemäß einigen weiteren Ausführungsformen des Verfahrens können die Beobachtungsdaten über Verkehrsbewegungen Informationen über Bewegungen von luftbasierten Vehikeln wie etwa Luftfahrzeugen, Fluggeräten oder Flugkörpern und/oder über Bewegungen von wasserbasierten Vehikeln wie etwa Booten, Schiffen oder U-Booten umfassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild einer Verkehrsüberwachungseinrichtung gemäß einer Ausführungsform der Erfindung; und
Fig. 2 ein Flussdiagramm eines Verfahrens zur Überwachung von Verkehrsbewegungen gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

In der folgenden Beschreibung wird auf selbstlernende Algorithmen Bezug genommen, welche in einem System künstlicher Intelligenz (KI-System) genutzt werden. Allgemein gesprochen, bildet ein selbstlernender Algorithmus kognitive Funktionen nach, die nach menschlichem Ermessen einer menschlichen Denkleistung zugeordnet werden. Dabei kann der selbstlernende Algorithmus durch Hinzunahme neuer Trainingsinformationen die bislang aus alten Trainingsinformationen gewonnenen Erkenntnisse dynamisch an die veränderten Umstände anpassen, um in der Gesamtheit der Trainingsinformationen Muster und Gesetzmäßigkeiten zu erkennen und zu extrapolieren.

In selbstlernenden Algorithmen im Sinne der vorliegenden Erfindung können alle Arten des den menschlichen Erkenntnisgewinn bildenden Trainings verwendet werden, wie besipielsweise überwachtes Lernen, teil-überwachtes Lernen, selbständiges Lernen auf der Basis generativer, nicht-generativer oder tiefer kontradiktorischer Netzwerke ("adversarial networks", AN), bestärkendes Lernen oder aktives Lernen. Dabei kann in jeder Instanz merkmalsbasiertes Lernen ("representation learning") eingesetzt werden. Die selbstlernenden Algorithmen im Sinne der vorliegenden Erfindung können insbesondere eine iterative Anpassung von zu lernenden Parametern und Merkmalen über rückkoppelnde Analyse vornehmen.

Ein selbstlernender Algorithmus im Sinne der vorliegenden Erfindung kann auf einem Stützvektorklassifikator ("support vector network", SVN), einem neuronalen Netzwerk wie etwa ein faltendes neuronales Netzwerk ("convolutional neural network", CNN), ein Kohonen-Netz, ein rekurrentes neuronales Netzwerk, ein zeitverzögerndes neuronales Netzwerk ("time-delayed neural network", TDNN) oder ein oszillierendes neronales Netzwerk ("oscillatory neural network", ONN), einem Random-Forest-Klassifikator, einem Entscheidungsbaum-Klassifikator, einem Monte-Carlo-Netzwerk oder einem Bayes'schen Klassifikator aufbauen. Dabei kann ein selbstlernender Algorithmus im Sinne der vorliegenden Erfindung eigenschaftshereditäre Algorithmen, k-Means-Algorithmen wie etwa Lloyd- oder MacQueen's-Algorithmen oder TD-Lernalgorithmen wie etwa SARSA oder Q-Learning einsetzen.

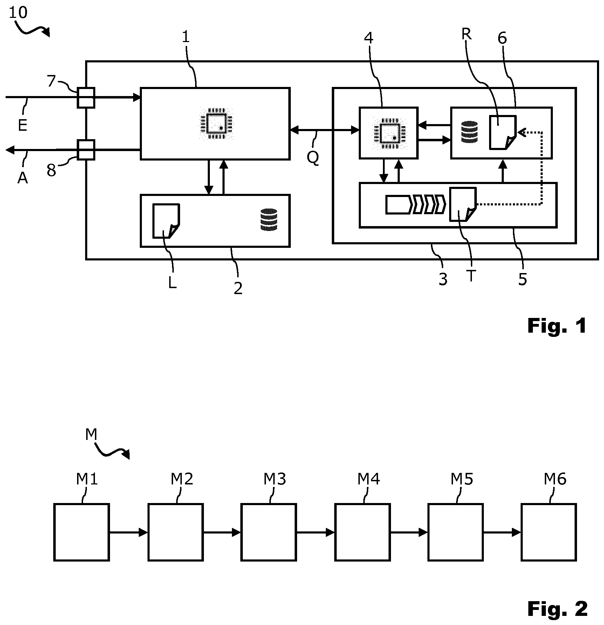

Fig. 1 zeigt eine beispielhafte Illustration einer Verkehrsüberwachungseinrichtung 10. Die Verkehrsüberwachungseinrichtung 10 weist einen Überwachungsprozessor 1 mit einer Eingabeschnittstelle 7 und einer Ausgabeschnittstelle 8 auf. An der Eingabeschnittstelle 7 können einerseits zeitlich und räumlich aufgelöste Beobachtungsdaten E über Verkehrsbewegungen empfangen und andererseits Anfragen oder Trainingssets von angeschlossenen weiteren Systemen an den Überwachungsprozessor 1 gesendet werden. An den Überwachungsprozessor 1 kann ein Verkehrsbewegungsdatenspeicher 2 angekoppelt sein. Dieser Verkehrsbewegungsdatenspeicher 2 dient zur temporären oder dauerhaften Speicherung von den zeitlich und räumlich aufgelösten Beobachtungsdaten E über Verkehrsbewegungen, auf die der Überwachungsprozessor 1 zur Übermittlung an ein nachgelagertes KI-System 3 zurückgreifen kann.

Das KI-System 3 weist einen KI-Prozessor 4, einen auf selbstlernenden Algorithmen basierenden Regelwerkgenerator 5 und einen Referenzregelwerkspeicher 6 auf. Das KI-System 3 steht über den KI-Prozessor 4 mit dem Überwachungsprozessor 1 in bidirektionaler Datenkommunikation. Der Überwachungsprozessor 1 übermittelt dem KI-System 3 zunächst eine Vielzahl von historischen und/oder aktuellen Beobachtungsdaten E über Verkehrsbewegungen. Diese Beobachtungsdaten E dienen als Basis für die Detektion von Mustern und Gesetzmäßigkeiten in den Verkehrsbewegungen durch den Regelwerkgenerator 5. Der Regelwerkgenerator 5 kann beispielsweise einen Stützvektorklassifikator, ein neuronales Netzwerk, einen Random-Forest-Klassifikator, einen Entscheidungsbaum-Klassifikator, ein Monte-Carlo-Netzwerk oder einen Bayes'schen Klassifikator aufweisen.

Die detektierten Muster und Gesetzmäßigkeiten in den Verkehrsbewegungen werden zunächst iterativ in einem Trainingsregelwerk T abgelegt, welches dynamisch und laufend aktualisiert wird. Aus dem Trainingsregelwerk T wird ein operatives Referenzregelwerk R gebildet, welches der Regelwerkgenerator 5 in den Referenzregelwerkspeicher 6 speichert. Wenn der KI-Prozessor 4 nun eine Anfrage Q des Überwachungsprozessors 1 erhält, Prüfdaten einzelner über die Eingabeschnittstelle 7 empfangener Verkehrsbewegungen zu überprüfen, greift der KI-Prozessor 4 als Referenz auf das in dem Referenzregelwerkspeicher 6 abgelegten Referenzregelwerk R zurück. Gegenüber dieser Referenz überprüft der KI-Prozessor 4 die Prüfdaten auf Abweichungen von erwarteten bzw. als gewöhnlich anzusehenden Verkehrsbewegungen.

Die Ergebnisse der Abweichungsanalyse werden dem Überwachungsprozessor 1 rückübermittelt, welcher dann dazu ausgelegt ist, über die Ausgabeschnittstelle 8 Warnsignale A auszugeben, falls die von dem KI-Prozessor 4 ermittelten Abweichungen über einem vorgebbaren Abweichungsschwellwert liegen.

Der Regelwerkgenerator 5 kann das in dem Referenzregelwerkspeicher 6 abgelegte Referenzregelwerk R in periodischen Abständen auf der Basis neu hinzukommender Beobachtungsdaten E über Verkehrsbewegungen aktualisieren.

Fig. 2 zeigt ein Verfahren M zur Überwachung von Verkehrsbewegungen. Das Verfahren M kann beispielsweise in einer Verkehrsüberwachungseinrichtung 10 wie beispielhaft in der Fig. 1 dargestellt implementiert werden.

Das Verfahren M weist als ersten Schritt M1 ein Empfangen von zeitlich und räumlich aufgelösten Beobachtungsdaten über Verkehrsbewegungen auf, beispielsweise an einer Empfangsschnittstelle 7 eines Überwachungsprozessors 1 in einer Verkehrsüberwachungseinrichtung 10 wie in Fig. 1 dargestellt. Die Verkehrsüberwachungseinrichtung 10 kann dabei beispielsweise ein Teil eines elektronischen Datenverarbeitungssystems sein, in dem die Beobachtungsdaten über Verkehrsbewegungen aufgenommen, verarbeitet und gespeichert werden. In einem zweiten Schritt M2 werden Muster und Gesetzmäßigkeiten in den Verkehrsbewegungen auf der Basis von den empfangenen zeitlich und räumlich aufgelösten Beobachtungsdaten detektiert. Dies geschieht mittels eines auf selbstlernenden Algorithmen basierenden Regelwerkgenerators 5 eines KI-Systems 3. Ein solcher Regelwerkgenerator 5 kann beispielsweise einen Stützvektorklassifikator, ein neuronales Netzwerk, einen Random-Forest-Klassifikator, einen Entscheidungsbaum-Klassifikator, ein Monte-Carlo-Netzwerk oder einen Bayes'schen Klassifikator aufweisen.

In iterativen und dynamisch adaptiven Lernprozessen wird ein Trainingsregelwerk T in dem Regelwerkgenerator 5 erzeugt, welches ständig aktualisiert wird, insbesondere bei einem laufenden Empfang von aktuellen Beobachtungsdaten über Verkehrsbewegungen. Der Regelwerkgenerator 5 erzeugt aus dem Trainingsregelwerk T in einem Schritt M3 ein Referenzregelwerk R, welches auf den durch den Regelwerkgenerator 5 detektierten Mustern und Gesetzmäßigkeiten basiert, und speichert es in einem Schritt M4 in einem Referenzregelwerkspeicher 6 des KI-Systems 3. Dieses Referenzregelwerk R stellt das operative Regelwerk dar, mithilfe dessen in einem fünften Schritt M5 Prüfdaten einzelner an dem Überwachungsprozessor 1 empfangener Verkehrsbewegungen auf Abweichungen überprüft werden. Dazu wird das in dem Referenzregelwerkspeicher 6 abgelegte Referenzregelwerk R durch einen KI-Prozessor 4 des KI-Systems 3 mit den Prüfdaten verglichen, um zu ermitteln, inwieweit die einzelne Verkehrsbewegungen charakterisierenden Prüfdaten von den erwarteten bzw. Gewöhnlichen Verkehrsbewegungen abweichen.

Der KI-Prozessor 4 erhält dazu eine Anfrage Q durch den Überwachungsprozessor 1, der gezielt, zufällig oder auf eine Nutzeranforderung hin die zu überprüfenden Verkehrsbewegungen aus einer Liste von Verkehrsbewegungen aussucht und an den KI-Prozessor 4 übermittelt. Das durch den KI-Prozessor 4 bei der Abweichungsanalyse ermittelte Resultat wird an den Überwachungsprozessor 1 zurückgegeben, der in einem sechsten Schritt M6 zunächst überprüft, ob die von dem KI-Prozessor 4 ermittelten Abweichungen über einem vorgebbaren Abweichungsschwellwert liegen. Dabei können für unterschiedliche Verkehrsbewegungen je nach Art der zu überprüfenden Verkehrsbewegung unterschiedliche Abweichungsschwellwerte herangezogen werden. Falls die Abweichungen über dem jeweils maßgeblichen Abweichungsschwellwert liegen, wird im Rahmen des sechsten Schritts M6 ein oder mehrere Warnsignale A an einer Ausgabeschnittstelle 8 des Überwachungsprozessors 1 ausgegeben. Diese Warnsignale A dienen dazu, entweder ein nachgeordnetes Überwachungssystem oder einen menschlichen Nutzer über das Vorliegen als ungewöhnlich angesehener Verkehrsbewegungen aufmerksam zu machen. Die als ungewöhnlich klassifizierten Verkehrsbewegungen können dann automatisiert oder teilautomatisiert in ein System zur Einleitung geeigneter Reaktionsmaßnahmen eingespeist werden, um frühzeitig auf das Auftreten potentiell bedrohlicher Ereignisse reagieren zu können.

Da das Referenzregelwerk R zumindest für einen bestimmten Zeitraum statisch ist, wird die Reproduzierbarkeit der Klassifikation durch den KI-Prozessor 4 verbessert. Damit das KI-System 3 aber auf veränderte Randbedingungen reagieren kann, kann es vorgesehen sein, dass der Regelwerkgenerator 5 das in dem Referenzregelwerkspeicher 6 abgelegte Referenzregelwerk R in periodischen Abständen aktualisiert. Dies kann beispielsweise auf der Basis neu hinzukommender Beobachtungsdaten über Verkehrsbewegungen geschehen, wobei die ältesten Beobachtungsdaten über eine gleitende Fensterfunktion ("sliding window function") oder eine Fading-Memory-Funktion weniger stark bzw. gar nicht mehr bei der Erzeugung des Trainingsregelwerks berücksichtigt werden.

Das Verfahren M und die Verkehrsüberwachungseinrichtung 10 eignen sich insbesondere zur Analyse von Beobachtungsdaten, die Informationen über Bewegungen von luftbasierten Vehikeln wie etwa Luftfahrzeugen, Fluggeräten oder Flugkörpern und/oder über Bewegungen von wasserbasierten Vehikeln wie etwa Booten, Schiffen oder U-Booten umfassen. Diese Bewegungsinformationen können beispielsweise multiparametrische Routeninformationen, Geschwindigkeitsinformationen und/oder Positionsinformationen der luft- oder wasserbasierten Vehikel umfassen.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Verkehrsüberwachungseinrichtung (10), umfassend:
einen Überwachungsprozessor (1) mit einer Eingabeschnittstelle (7) und einer Ausgabeschnittstelle (8); und
einem einen KI-Prozessor (4), einen auf selbstlernenden Algorithmen basierenden Regelwerkgenerator (5) und einen Referenzregelwerkspeicher (6) aufweisenden KI-System (3), welches mit dem Überwachungsprozessor (1) in bidirektionaler Datenkommunikation steht,
wobei der Regelwerkgenerator (5) des KI-Systems (3) dazu ausgelegt ist, auf der Basis von über die Eingabeschnittstelle (7) des Überwachungsprozessors (1) empfangenen zeitlich und räumlich aufgelösten Beobachtungsdaten (E) über Verkehrsbewegungen Muster und Gesetzmäßigkeiten in den Verkehrsbewegungen zu detektieren und die detektierten Muster und Gesetzmäßigkeiten in den Verkehrsbewegungen als Referenzregelwerk (R) in dem Referenzregelwerkspeicher (6) zu speichern,
wobei der KI-Prozessor (4) dazu ausgelegt ist, auf Anfrage (Q) des Überwachungsprozessors (1) Prüfdaten einzelner über die Eingabeschnittstelle (7) empfangener Verkehrsbewegungen auf Abweichungen von dem in dem Referenzregelwerkspeicher (6) abgelegten Referenzregelwerk (R) zu überprüfen, und
wobei der Überwachungsprozessor (1) dazu ausgelegt ist, über die Ausgabeschnittstelle (8) Warnsignale (A) auszugeben, falls die von dem KI-Prozessor (4) ermittelten Abweichungen über einem vorgebbaren Abweichungsschwellwert liegen.

2. Verkehrsüberwachungseinrichtung (10) gemäß Anspruch 1, wobei der Regelwerkgenerator (5) weiterhin dazu ausgelegt ist, das in dem Referenzregelwerkspeicher (6) abgelegte Referenzregelwerk (R) in periodischen Abständen auf der Basis neu hinzukommender Beobachtungsdaten (E) über Verkehrsbewegungen zu aktualisieren.

3. Verkehrsüberwachungseinrichtung (10) gemäß einem der Ansprüche 1 und 2, weiterhin mit:
einem Verkehrsbewegungsdatenspeicher (2), welcher mit dem Überwachungsprozessor (1) gekoppelt und welcher dazu ausgelegt ist, die über die Eingabeschnittstelle (7) des Überwachungsprozessors (1) empfangenen zeitlich und räumlich aufgelösten Beobachtungsdaten (E) über Verkehrsbewegungen zu speichern.

4. Verkehrsüberwachungseinrichtung (10) gemäß einem der Ansprüche 1 bis 3, wobei der Regelwerkgenerator (5) einen Stützvektorklassifikator, ein neuronales Netzwerk, einen Random-Forest-Klassifikator, einen Entscheidungsbaum-Klassifikator, ein Monte-Carlo-Netzwerk oder einen Bayes'schen Klassifikator aufweist.

5. Verkehrsüberwachungseinrichtung (10) gemäß einem der Ansprüche 1 bis 4, wobei die Beobachtungsdaten über Verkehrsbewegungen Informationen über Bewegungen von luftbasierten Vehikeln wie etwa Luftfahrzeugen, Fluggeräten oder Flugkörpern und/oder über Bewegungen von wasserbasierten Vehikeln wie etwa Booten, Schiffen oder U-Booten umfassen.

6. Verkehrsüberwachungseinrichtung (10) gemäß Anspruch 5, wobei die Informationen über Bewegungen Routeninformationen, Geschwindigkeitsinformationen und/oder Positionsinformationen der luft- oder wasserbasierten Vehikel umfassen.

7. Verfahren zur Überwachung von Verkehrsbewegungen, umfassend:
Empfangen (M1) von zeitlich und räumlich aufgelösten Beobachtungsdaten (E) über Verkehrsbewegungen durch einen Überwachungsprozessor (1);
Detektieren (M2) von Mustern und Gesetzmäßigkeiten in den Verkehrsbewegungen auf der Basis von den empfangenen zeitlich und räumlich aufgelösten Beobachtungsdaten mittels eines auf selbstlernenden Algorithmen basierenden Regelwerkgenerators (5) eines KI-Systems (3);
Erzeugen (M3) eines Referenzregelwerks (R), welches auf den durch den Regelwerkgenerator (5) detektierten Mustern und Gesetzmäßigkeiten basiert; Speichern (M4) des Referenzregelwerks (R) in einem Referenzregelwerkspeicher (6) des KI-Systems (3);
Überprüfen (M5) von Prüfdaten einzelner an dem Überwachungsprozessor (1) empfangener Verkehrsbewegungen auf Abweichungen von dem in dem Referenzregelwerkspeicher (6) abgelegten Referenzregelwerk (R) durch einen KI-Prozessor (4) des KI-Systems (3); und
Ausgeben (M6) von Warnsignalen (A) durch den Überwachungsprozessor (1), falls die von dem KI-Prozessor (4) ermittelten Abweichungen über einem vorgebbaren Abweichungsschwellwert liegen.

8. Verfahren (M) gemäß Anspruch 7, wobei der Regelwerkgenerator (5) das in dem Referenzregelwerkspeicher (6) abgelegte Referenzregelwerk (R) in periodischen Abständen auf der Basis neu hinzukommender Beobachtungsdaten (E) über Verkehrsbewegungen aktualisiert.

9. Verfahren (M) gemäß einem der Ansprüche 7 und 8, wobei der Regelwerkgenerator (5) einen Stützvektorklassifikator, ein neuronales Netzwerk, einen Random-Forest-Klassifikator, einen Entscheidungsbaum-Klassifikator, ein Monte-Carlo-Netzwerk oder einen Bayes'schen Klassifikator aufweist.

10. Verfahren (M) gemäß einem der Ansprüche 7 bis 9, wobei die Beobachtungsdaten über Verkehrsbewegungen Informationen über Bewegungen von luftbasierten Vehikeln wie etwa Luftfahrzeugen, Fluggeräten oder Flugkörpern und/oder über Bewegungen von wasserbasierten Vehikeln wie etwa Booten, Schiffen oder U-Booten umfassen.
